# EUROPÄISCHE PATENTSCHRIFT

(11) **EP 1 245 319 B1**
(45) Veröffentlichungstag und Bekanntmachung des Hinweises auf die Patenterteilung: **21.06.2006**
(21) Anmeldenummer: 02005840.0
(22) Anmeldetag: 14.03.2002
(51) Int. Cl.: B23D 45/02, B23D 45/14, B23D 47/02, B23D 47/04, B23Q 1/54

(54) **Schwenkbare Trageinrichtung für eine Kreissäge**
Rotary stand for circular saw
Support tournant pour scie circulaire

(30) Priorität: 29.03.2001 DE 10115654
(43) Veröffentlichungstag der Anmeldung: 02.10.2002
(73) Patentinhaber: ROTOX GmbH B. EISENBACH, 56858 Grenderich (DE)
(72) Erfinder: Eisenbach, Bernd, 65611 Brechen (DE); Theis, Udo, 56858 Grenderich (DE)
(74) Vertreter: Müller, Eckhard

(56) Entgegenhaltungen:
- EP-A- 0 936 037
- DE-A- 19 500 265
- DE-C- 936 137
- GB-A- 1 560 619
- IT-B- 1 180 602
- US-A- 3 291 166
- US-A- 4 972 748

## Beschreibung

Die Erfindung betrifft eine Vorrichtung, insbesondere eine Schifter-Schnittsäge, zur Ausführung von wenigstens zwei einander schneidenden Schnittflächen an einem Werkstück gemäβ dem Oberbegriff des Anspruchs 1, welche um einen Ausklinkwinkel zueinander geneigt sowie um einen Verschwenkwinkel gegeneinander verschränkt ausgerichtet sind, beispielsweise zur Herstellung eines Schifters oder dergleichen, mit einem um eine Rotationsachse rotierenden und mittels einer Schwenkvorrichtung um eine Schwenkachse verschwenkbaren Sägeblatt, wobei die Schwenkachse zur Bearbeitung des Werkstücks außerhalb der Auflagefläche angeordnet ist, und mit Positionier-/Haltemitteln, mittels denen das zu bearbeitende Werkstück auf einer Auflagefläche zur Ausrichtung des Werkstückes für die Ausführung der Schnittflächen festlegbar ist. Eine solche Vorrichtung ist aus DE 195 00265 A bekannt.

Schifter sind Konstruktionselemente zur Erstellung von Walmdachkonstruktionen, Wintergärten oder dergleichen, die unter anderem einen im wesentlichen nicht rechteckförmigen Ausklinkungsabschnitt mit einer vorgegebenen Ausklinktiefe aufweisen, an welche sich eine im vorgegebenen Ausklinkwinkel und einem entsprechenden Höhenversatz (Ausklinkhöhe) angeordnete Schrägfläche anschließt. Ausklinkwinkel, Ausklinktiefe, Ausklinkhöhe sowie Verschwenkwinkel sind den individuellen Konstruktionen anzupassen.

In der Fachsprache des Zimmermanns wird mit Schifter ein Verbandholz bezeichnet, das schräge, nicht rechtwinklige Schnittflächen besitzt, wie zum Beispiel Grat-, Kehl-, Verfallungs- und Schiftsparren, Sparrenfüße, Strebenversatz, Bug- und Strebenzapfen, Klauen, Zangen und Kehlbalkenenden, schräge Ausplattung an Sparren und Streben, Schrägflächen an Aufschieblingen oder dergleichen. Nach einer anderen Definition wird unter Schifter ein Balken mit schrägen Schnittflächen verstanden.

Bislang werden Schifter häufig durch den Einsatz zweier separater Schnittsägen hergestellt, welche in den vorgegebenen Ausklinkwinkel gegeneinander geneigt und entsprechend dem Verschwenkwinkel zueinander verschränkt angeordnet sind. Derartige Vorrichtungen bedingen einen hohen konstruktiven Aufwand mit den damit verbundenen Kosten für die beiden kompletten Sägeeinheiten. Auch sind die Sägeeinheiten hintereinander anzuordnen, wodurch ein entsprechend großer Verfahrweg erforderlich ist und diese bekannten Vorrichtungen einen großen Bauraum beanspruchen.

Für die Einzelherstellung derartiger Schifter-Elemente sind bereits Führungen für das Sägeblatt der handgeführten Säge-Vorrichtung bekannt geworden. Derartige Führungen werden dem individuellen Werkstück aufgespannt und entsprechend der auszuführenden Schnittfläche positioniert und eingestellt. Anschließend kann dann das Sägeblatt in Anlage an diese Führungen gebracht und der Schnitt an dem Werkstück ausgeführt werden.

Derartige Führungsmittel sind beispielsweise in der US 4,031,794 beschrieben. Diese Vorrichtungen sind jedoch nur für eine Einzelanfertigung oder die Anfertigung einer geringen Anzahl von Schifter-Werkstücken geeignet, da das Anlegen, Einstellen beziehungsweise Positionieren und Festklemmen dieser Führungsvorrichtungen aufwendig und auch nicht sonderlich genau ist. Diese bekannten Führungsvorrichtungen sind jedenfalls nicht zur Herstellung einer Vielzahl von Schifter-Elementen geeignet, da der Zeitaufwand zur Ausführung einer einzelnen Schnittfläche erheblich und auch die Genauigkeit eingeschränkt ist.

Eine Vorrichtung der eingangs genannten Art ist aus der DE 195 00 265 A1 bekannt. Die Schneidvorrichtung weist zwei Werkstückauflagen und einen zwischen den Werkstückauflagen verschwenkbar angeordneten Rundtisch auf. Der Rundtisch ist in seiner Mitte mit einer Ausnehmung versehen, durch welche ein erstes Sägeblatt hindurchragt. Das erste Sägeblatt ist über Schenkellager, welche eine Schwenkachse bilden, verschwenkbar an dem ebenfalls schwenkbaren Rundtisch angeordnet. An zwei Säulen befindet sich höhenverstellbar ein weiteres Sägeblatt, welches in eine Horizontalebene parallel zu der Oberfläche des Rundtisches liegt. Es ist ein drittes Sägeblatt vorgesehen, welches mit Hilfe einer kreisbogenförmigen Kulissenführung um eine Achse verschwenkbar ist. Die bekannte Vorrichtung ermöglicht das Ausführen von Schnittflächen, welche um einen Ausklinkwinkel zueinander geneigt, sowie um einen Verschwenkwinkel gegeneinander verschränkt ausgerichtet sind, wobei hierzu wenigstens zwei der Sägeblätter notwendig sind und gleichzeitig eine Verschwenkung des Rundtisches durchgeführt werden muss.

Aus der IT 1 180 602 B ist eine Schleifvorrichtung mit einer einzigen Schleifscheibe bekannt, welche zum Bearbeiten von Marmorplatten dient. Dabei ist die Schleifscheibe um eine Rotationsachse rotierbar und mittels einer Schwenkvorrichtung um eine Schwenkachse verschwenkbar.

Vorrichtungen zum Ausführen von zueinander geneigten und gegeneinander verschränkten Schnittflächen sind beispielsweise aus der DE 35 23 033 A1 beziehungsweise der parallelen US-Schrift US 4,545,274 bekannt. Die Schneidvorrichtung umfaßt dort einen Hauptträger mit starren Armen, die an den Enden angeordnet, durch einen Rahmen-Längsteil miteinander verbunden sind. Ein Paar von Gratführungsschienen ist parallel in einem Abstand voneinander zwischen den Armen befestigt. Ein Sektorzahnrad trägt Halteblöcke, die geführt werden durch die beiden Führungsschienen, welche eine genaue Einstellung des Sektorzahnrades gestatten. Der Zweck ist das genaue Positionieren einer Sägeblatt-Drehachse in die Ebene, die durch die obere Fläche des Fördersystems oder die untere Längsseite der Holzteile gegeben ist. Des weiteren ist das Sägeblatt um eine weitere Achse mittels Luftdruckzylinderpaaren verschwenkbar (Figur 6 der DE 35 23 033 A1).

Eine ähnliche Vorrichtung ist auch aus der US 4,316,400 A1 bekannt, bei der das Sägeblatt einer jeden Schnittsäge um eine Schwenkachse verschwenkbar ist. Jedes einzelne dieser verschwenkbaren Sägeblätter ist um eine Schwenkachse verschwenkbar, welche exakt in der Auflagefläche für das Werkstück liegt.

Schließlich ist auch aus der DE 44 11 255 A1 eine Säge für Gehrungs- und Schifterschnitte bekannt mit wenigstens einer Sägeeinheit, welche ein Schwenkgestell zur Einstellung von Gehrungsschnitten und eine erste lineare Vorschubeinheit mit einem Schwenkarm zur Einstellung von Schifterschnitten aufweist. An dem Schwenkarm ist eine Konsole linear verschiebbar angeordnet, auf der ein Sägeblatt mit zugehöriger Antriebseinheit befestigt ist. Insbesondere ist das Sägeblatt dieser Vorrichtung um zwei verschiedene, im wesentlichen senkrecht aufeinander stehende Schwenkachsen verschwenkbar, wobei jede der beiden Schwenkachsen durch lineare Verstellmittel individuell positioniert werden kann.

Sämtlichen aus dem Stand der Technik bekannten Vorrichtungen zur maschinellen, reproduzierbaren Herstellung von Schifter-Konstruktionselementen haftet der Nachteil an, daß die Vorrichtungen äußerst komplex aufgebaut und damit kostspielig sind, einen hohen Bauraum beanspruchen und auch die Handhabung beziehungsweise Programmsteuerung derartiger Vorrichtungen sehr aufwendig ist.

Zusammenfassend weisen die Vorrichtungen nach dem Stand der Technik den Nachteil eines großen Zeitaufwandes zur Erstellung der Schnittflächen und eine hohe Maßtoleranz auf, während die maschinellen Vorrichtungen zur Herstellung einer Mehrzahl bzw. Vielzahl von Schifter-Elementen den Nachteil eines hohen Konstruktions- und Bedienungsaufwandes sowie großen Platzbedarf besitzen.

Davon ausgehend liegt der vorliegenden Erfindung die Aufgabe zugrunde, einen Vorrichtung, insbesondere eine Schifter-Schnittsäge mit den eingangs genannten Merkmalen anzugeben, welche einen konstruktiv einfachen Aufbau besitzt, einfach zu handhaben ist und eine hohe Maßhaltigkeit aufweist.

Diese Aufgabe wird bei der Vorrichtung mit den eingangs genannten Merkmalen i. w. dadurch gelöst, daß das Sägeblatt von einer Schwenklage zur Ausführung der ersten Schnittfläche in eine Schwenklage zur Ausführung der zweiten Schnittfläche um den Ausklinkwinkel verschwenkbar ist und dass bei einer Ausführung der Schnittflächen das Werkstück mittels der Positionier-/Haltemittel gegenüber einer senkrecht auf der Schwenkachse angeordneten, in der Ebene der Auflagefläche liegenden Achse um den Verschwenkwinkel ausgerichtet ist, welcher einen Wert zwischen ± 80° aufweist. Weitere vorteilhafte Ausführungsformen sind den abhängigen ansprüchen 2 bis 16 zu entnehmen.

Aufgrund dieser Maßnahmen läßt sich die Vorrichtung, insbesondere die Schifter-Schnittsäge konstruktiv einfach aufbauen, da lediglich ein einziges Sägeblatt erforderlich ist. Auch wird ein nur relativ geringer Bauraum benötigt. Ferner ist die Handhabung der Vorrichtung sehr einfach, wobei Schifter-Elemente mit hoher Präzision der räumlichen Anordnung der Schnittflächen hergestellt werden können.

Ein wesentlicher Aspekt der Vorrichtung besteht darin, daß das Sägeblatt zur Herstellung der Schnittflächen um eine Schwenkachse verschwenkbar ist, die außerhalb, bevorzugt oberhalb der Auflagefläche für das Werkstück liegt. Somit kann beispielsweise bei entsprechender Schwenklage des Sägeblattes eine erste Schnittfläche des Ausklinkungsabschnitts des Werkstücks ausgeführt werden, welches beispielsweise im wesentlichen parallel zu der Auflagefläche angeordnet ist und durch den Abstand die Ausklinkhöhe des Ausklinkungsabschnitts bestimmt. Anschließend wird das Sägeblatt um den Ausklinkwinkel verschwenkt, um die zweite Schnittfläche ausführen zu können. Dabei ergibt sich die Verschränkung der zweiten Schnittfläche relativ zur ersten Schnittfläche dadurch, daß das Werkstück mittels der Positionier-Haltemittel nicht senkrecht zur Schwenkachse des Sägeblatts ausgerichtet ist, sondern um den gewünschten Verschwenkwinkel bezogen auf eine auf der Schwenkachse im rechten Winkel stehenden und in der Ebene der Auflagefläche liegenden Achse. Die zur Bildung des Ausklinkungsabschnitts erforderlichen zwei Schnittflächen lassen sich einfach dadurch bewerkstelligen, daß das Sägeblatt nach Ausführung der ersten Schnittfläche lediglich um den Ausklinkwinkel um die Schwenkachse geschwenkt wird, um dann die zweite Schnittfläche auszuführen. Aufgrund des einfachen konstruktiven Aufbaus der Vorrichtung lassen sich die Schnittflächen sehr schnell und mit hoher Präzision ausführen, wobei aufwendige Steuerungseinheiten, kostspielige Verstellmittel oder dergleichen nicht erforderlich sind. Bei ansonsten unveränderten Parametern ist das Sägeblatt lediglich von der einen Schwenklage zur Ausführung der ersten Schnittfläche in die zweite Schwenklage zur Ausführung der zweiten Schnittfläche überzuführen.

Nach einer vorteilhaften Weiterbildung der Erfindung ist das Sägeblatt in Richtung der Schwenkachse relativ zur Auflagefläche in einer Vorschubbewegung im wesentlichen bevorzugt linear verfahrbar, so daß das Sägeblatt zur Ausführung der jeweiligen Schnittflächen relativ zum Werkstück bewegt werden kann.

Weiterhin bietet es sich an, daß das Sägeblatt im wesentlichen in einem rechten Winkel zur Schwenkachse relativ zur Auflagefläche für die Einstellung einer Ausklinkhöhe und/oder Ausklinktiefe linear verfahrbar ist. Durch diese Maßnahme kann die Schwenkachse des Sägeblatts, welche innerhalb des Werkstückes liegt, individuell positioniert und damit die Ausklinktiefe beziehungsweise Ausklinkhöhe des Ausklinkungsabschnitts individuell definiert und eingestellt werden. Der Vorteil der vorgenannten Maßnahmen besteht u. a. auch darin, daß nicht mehrere unterschiedliche Schwenkachsen für das Sägeblatt vorgesehen sind, sondern daß das Sägeblatt lediglich um eine einzige Schwenkachse schwenkbar ist. Diese Schwenkachse beziehungsweise die entsprechende Schwenkvorrichtung ist mittels linearer Führungsmittel, beispielsweise entlang der Achsen eines zwei- oder dreidimensionalen kartesischen Koordinatensystems linear verfahrbar. Auch insoweit reduziert sich der konstruktive Aufwand, als Linearführungen konstruktiv einfach mit hoher Präzision herstellbar sind und lediglich eine einzige Schwenkvorrichtung zum Schwenken des Sägeblatts erforderlich ist.

Von Vorteil ist die Schwenkachse im wesentlichen eine Tangente zu der kreisförmigen Umfangslinie des Sägeblatts. Insoweit fällt die Mittelachse des Ausklinkwinkels des Schifter-Elements mit der Schwenkachse zusammen.

Weiterhin ist vorgesehen, daß die Schwenkachse in einer zur im wesentlichen ebenen Auflagefläche des Werkstücks parallelen Ebene liegt, so daß eine der am Werkstück auszuführenden Schnittflächen bei entsprechend eingestelltem Schwenkwinkel des Sägeblatts ebenfalls in einer zur Auflagefläche parallelen Ebene ausführt werden kann.

Nach einer anderen vorteilhaften Ausgestaltung der Erfindung wird die Schwenkvorrichtung durch bevorzugt zwei kreisbogenförmige Führungen gebildet, an denen das Sägeblatt mit Antrieb auf einer Kreisbogenbahn verfahrbar befestigt ist. Der Einsatz solcher kreisbogenförmigen Führungen bietet die Vorraussetzung für eine stabile und präzise Schwenkführung des Sägeblattes um die Schwenkachse. Dabei ist an den bevorzugt zwei kreisbogenförmigen Führungen ein Querträger gelagert, der entlang der Kreisbogenbahn der Führungen verfahrbar ist. An dem Träger sind die erforderlichen Aggregate, wie beispielsweise Motor mit Sägeblatt und dergleichen befestigt.

Nach einer anderen Ausführungsform der Erfindung hat es sich als vorteilhaft erwiesen, daß die Schwenkvorrichtung an einem Kreuzsupport oder dergleichen Linearführung in Richtung der Schwenkachse und/oder senkrecht zur Schwenkachse, entweder zweiachsig oder auch dreiachsig, im wesentlichen linear verfahrbar angeordnet ist. Insoweit kann die Schwenkvorrichtung selbst als kompakte Einheit ausgebildet sein, die lediglich den Motor, das Sägeblatt sowie Haltevorrichtungen hierfür aufweist. Im Falle, daß Motor und Sägeblatt selbst zwei- oder dreiachsig verfahrbar mit der Schwenkvorrichtung gekoppelt sind, ist der mechanisch konstruktive Aufbau erheblich aufwendiger und komplexer. In diesem Fall baut die Schwenkvorrichtung mit Kreuzsupport, der dann mit verschwenkbar ist, erheblich größer, zumal auf Grund der erhöhten Masse auch erheblich größere Drehmomente beziehungsweise Trägheitsmomente beim Schwenken des Sägeblatts auftreten.

Nach einer anderen Ausführungsform der Erfindung hat es sich als vorteilhaft erwiesen, daß die Positionierungs-/Haltemittel an der Auflagefläche um eine Verschwenkachse und um den einstellbaren Verschwenkwinkel verschwenkbar festlegbar sind. Sofern ein modifizierter Verschwenkwinkel der beiden Schnittflächen einzustellen ist, ist es daher lediglich erforderlich, die Positionierungs-/Haltemittel um den entsprechenden Verschwenkwinkel bezüglich der Verschwenkachse zu verstellen und festzulegen, so daß dann das Werkstück in der neuen eingestellten Verschwenkposition auf der Fläche aufgelegt beziehungsweise festgespannt werden kann.

Dabei ist die Verschwenkachse zur Bearbeitung des Werkstückes in einem im wesentlichen rechten Winkel zu der Schwenkachse angeordnet.

Des weiteren ist es vorteilhaft, daß die Verschwenkachse die Schwenkachse des Sägeblattes schneidet.

Nach einer anderen Ausgestaltung der Erfindung sind die Rotationsachse des Sägeblattes und Schwenkachse zur Bearbeitung des Werkstückes von Vorteil im wesentlichen rechtwinklig zueinander angeordnet, wodurch sich der konstruktive Aufbau der Vorrichtung erheblich vereinfacht.

Dabei ist das Sägeblatt um eine einzige Schwenkachse verschwenkbar und in Richtung der Schwenkachse im wesentlichen linear verfahr, so daß in der gewählten Schwenkstellung des Sägeblattes die entsprechende Schnittfläche am Werkstück ausgeführt werden kann.

Auch bietet es sich an, daß die Ausklinktiefe des Ausklinkungsabschnittes durch Einstellung der Lage der Schwenkachse relativ zum Werkstück beziehungsweise zum Positionierungs-/Haltemittel einstellbar ist.

Der Ausklinkwinkel am Werkstück wird durch den Schwenkwinkel zwischen den Winkellagen des Sägeblattes zur Ausführung der ersten und zweiten Schnittfläche definiert.

Dabei sind die Schnittlinien zwischen den Schnittflächen nach einer vorteilhaften Ausgestaltung im wesentlichen parallel zu der Auflagefläche, welcher das Werkstück zur Bearbeitung aufliegt, angeordnet.

Von besonderem Vorteil nimmt der Ausklinkwinkel, also der Winkel zwischen den beiden Schnittflächen beziehungsweise der überstrichene Bereich des Schwenkwinkels des Sägeblatts zur Ausführung der beiden Schnittflächen, Werte bis zu 270°, bevorzugt bis 180°, insbesondere bis 150° an.

Bei einer Profilhöhe von ca. 250 mm und einer Profilbreite von ca. 400 mm kann die Ausklinkhöhe Werte im Bereich von ca. 100 mm bis ca. 200 mm, bevorzugt von ca. 110 mm bis 185 mm annehmen, wobei die Ausklinktiefe beispielsweise ca. 150 bis ca. 200 mm, bevorzugt 185 mm, beträgt. In diesem Ausführungsbeispiel kann der Ausklinkwinkel Werte zwischen ca. 150° und 90° annehmen, während der Verschwenkwinkel im Bereich zwischen ca. ±65° eingestellt ist.

Weitere Vorteile, Anwendungsmöglichkeiten und Ausgestaltungen der Erfindung ergeben sich aus der nachfolgenden Beschreibung der Ausführungsbeispiele anhand der Figuren.

Es zeigen:
- Figuren 1a-f: ein Ausführungsbeispiel der erfindungsgemäßen Vorrichtung in schematischer sowie perspektivischer Darstellung mit verschiedenen Verfahr- beziehungweise Schwenkstellungen des Sägeblatts zur Ausführung zweier Schnittflächen zur Herstellung eines Schifters,
- Figuren 2a-d: ein weiteres Ausführungsbeispiel der erfindungsgemäßen Vorrichtung in schematischer Darstellung und Seitenansicht mit verschiedenen Schwenkstellungen des Sägeblatts zur Herstellung eines Schifter-Elements mit einem Ausklinkungsabschnitt,
- Figur 3: ein Schifterelement in vergrößerter Darstellung zur Erläuterung der verwendeten Begriffe,
- Figur 4: den funktionellen Zusammenhang zwischen der Ausklinkhöhe und dem Ausklinkwinkel bei einem Werkstück einer Profilhöhe von 250 mm, einer Profilbreite von 400 mm, einem Verschwenkwinkelbereich von ± 65° und einer Ausklinktiefe von 185 mm,
- Figuren 5a-d: verschiedene Werkstücke mit variierendem Ausklinkungsabschnitt, hergestellt mittels einer erfindungsgemäßen Vorrichtung beziehungsweise einem erfindungsgemäßen Verfahren.

Zunächst sollen anhand von Figur 3 die verwendeten Begriffe näher werden. Der Schifter 20 wird aus einem Werkstück 22 durch Abtrennen eines Ausklinkungsabschnitts mittels zweier Schnittflächen 12, 14 hergestellt. Der Ausklinkwinkel der einander schneidenden Schnittflächen 12, 14 ist mit der Bezugsziffer 16 bezeichnet, während der Verschwenkwinkel 18 die gegeneinander verschränkte Lage der Schnittflächen 12, 14 angibt. Die Mittelachse des Ausklinkwinkels 16 fällt mit der Schwenkachse 32 des Sägeblatts 28 zusammen. Weiterhin ist der Ausklinkungsabschnitt durch die Ausklinkhöhe 46 sowie die Ausklinktiefe 58 definiert.

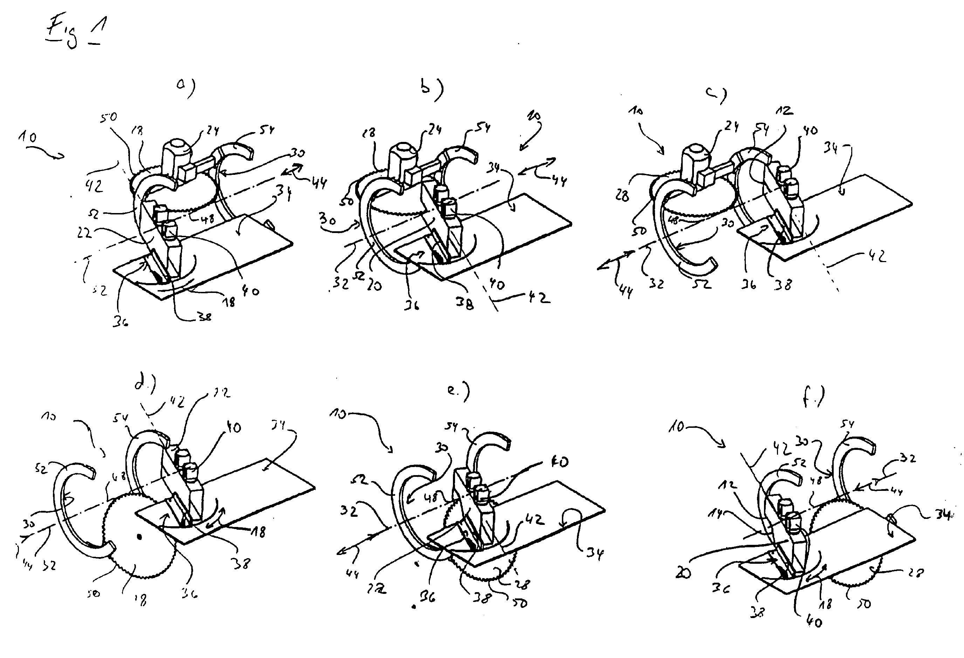

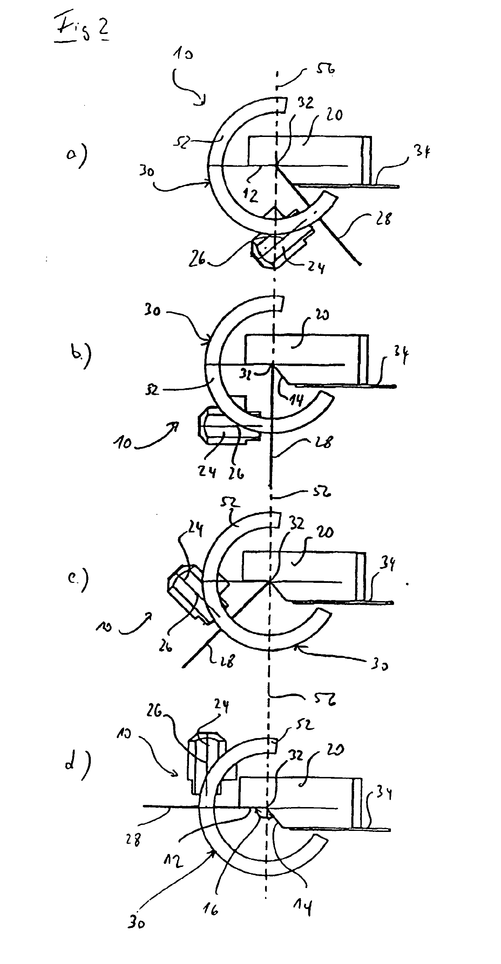

Bezugnehmend auf die Figuren 1 und 2 ist ein Ausführungsbeispiel der erfindungsgemäßen Vorrichtung 10 zur Ausführung von wenigstens zwei einander schneidenden Schnittflächen 12, 14 dargestellt, die zueinander winklig um einen Ausklinkwinkel 16 geneigt sowie gegeneinander um einen Verschwenkwinkel 18 verschränkt ausgerichtet sind. Diese Schnittflächen 12, 14 werden an dem Werkstück 22, zum Beispiel einem Schifter 20 oder dergleichen, mit einem mittels eines Motors 24 angetriebenen, in Rotation um eine Rotationsachse 26 versetzbaren Sägeblatt 28, bevorzugt einem Kreissägeblatt, ausgeführt, welches mittels einer Schwenkvorrichtung 30 um eine Schwenkachse 32, welche auch die Mittelachse des Ausklinkwinkels definiert, verschwenkbar ist.

Der Schwenkvorrichtung 30 ist eine Auflagefläche 34, ein Arbeitstisch oder ähnliches als Auflage des Werkstücks 22 zu dessen Bearbeitung zugeordnet, wobei an der Fläche 34 Positionier-/Haltemittel 36, wie eine Anlage 38, eine Führung, eine Halte- oder Spannvorrichtung 40 oder dergleichen, für das Werkstück 22 zur Definition der Ausrichtung 42 bei der Ausführung der Schnittflächen 12, 14 vorgesehen sind. Dabei liegt die Schwenkachse 32 des Sägeblatts 28 zur Bearbeitung des Werkstücks 22 außerhalb der Fläche 34, und es schließt die Ausrichtung 42 des Werkstückes 22 mit einer im rechten Winkel zur Schwenkachse 32 angeordneten, in der Ebene der Auflagefläche 34 liegenden Achse den Verschwenkwinkel 18 von ± 80° ein. Weiterhin ist das Sägeblatt 28 in Richtung der Schwenkachse 32 relativ zur Auflagefläche 34 in einer Vorschubbewegung 44 im wesentlichen linear verfahrbar. Auch ist das Sägeblatt 28 im wesentlichen in einem rechten Winkel zur Schwenkachse 32 relativ zur Auflagefläche 34 für die Einstellung der Ausklinkhöhe 46 im wesentlichen linear verfahrbar. Weiterhin kann das Sägeblatt 28 auch in Richtung hin zur Auflagefläche 34 linear verfahrbar sein, wodurch die Ausklinktiefe 58 einstellbar ist. Letzteres kann gegebenenfalls auch durch die Positionierung des Werkstücks auf der Fläche 34 bewerkstelligt werden, wobei dann die Schwenkachse 32 weiter oder weniger weit von der Frontseite des Werkstücks 22 hin zum Inneren des Werkstücks 22 verlagert ist.

Aus den Figuren 1 und 2 ist ebenfalls ersichtlich, daß die Schwenkachse 32 im wesentlichen eine Tangente zur im wesentlichen kreisförmigen Umfangslinie 50 des Sägeblatts 28 ist. Weiterhin verdeutlichen die Figuren 1 und 2, daß die Schwenkachse 32 in einer zur ebenen Auflagefläche 34 parallelen Ebene liegt.

Die Schwenkvorrichtung 30 wird durch bevorzugt zwei kreisbogenförmige Führungen 52, 54 gebildet, an denen der Motor 24 mit Sägeblatt 28, beispielsweise mittels eines Querträgers 48, auf einer Kreisbogenbahn verfahrbar befestigt ist. Die Schwenkvorrichtung 30 ist beispielsweise an einem Kreuzsupport oder dergleichen angeordnet und in Richtung der Schwenkachse 32 und/oder senkrecht zur Schwenkachse 32, das heißt 1-achsig, 2-achsig beziehungsweise auch 3-achsig, im wesentlichen linear verfahrbar.

Die Positionier-/Haltemittel 36 sind an der Auflagefläche 34 um eine Verschwenkachse 56 mit dem Verschwenkwinkel 18 verschwenkbar festlegbar. Die Verschwenkachse 56 ist in einem im wesentlichen rechten Winkel zu der Schwenkachse 32 angeordnet, wobei sich Verschwenkachse 56 und Schwenkachse 32 bevorzugt schneiden.

Das Sägeblatt 28 ist zur Bearbeitung des Werkstücks 22 beziehungsweise zur Herstellung des Schifters 20 um die einzige Schwenkachse 32 verschwenkbar und in Richtung der Schwenkachse 32 zur Ausführung der Schnittflächen 12, 14 im wesentlichen linear verfahrbar. Die Ausklinktiefe 58 wird durch Einstellung der Lage der Schwenkachse 32 relativ zum Werkstück 22 beziehungsweise relativ zu den Positionier /Haltemitteln 36 eingestellt. Der Verschwenkwinkel 18 der gegeneinander verschränkten Schnittflächen 12, 14 ist durch die Ausrichtung 42 des Werkstückes 22 gegenüber einer zur Schwenkachse 32 rechtwinkligen in der Auflagefläche 34 liegenden Achse bestimmt. Der Ausklinkwinkel 16 wird durch den Schwenkwinkel zwischen den Winkellagen des Sägeblatts 28 zur Ausführung der ersten und zweiten Schnittfläche 12, 14 definiert. Eine der Schnittflächen, insbesondere die Schnittfläche 12, ist bei dem hier gewählten Ausführungsbeispiel im wesentlichen parallel zur Auflagefläche 34 angeordnet.

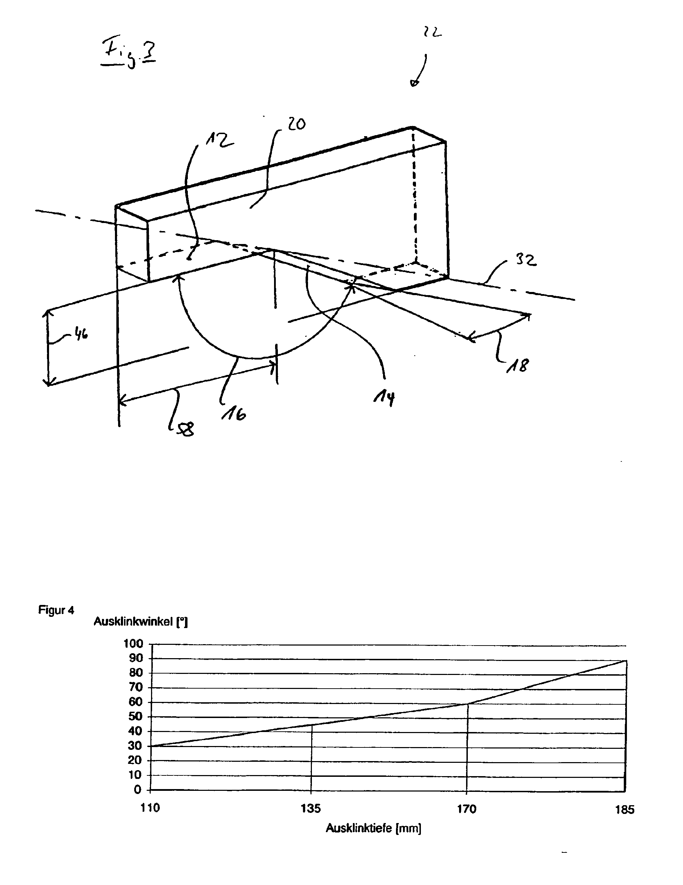

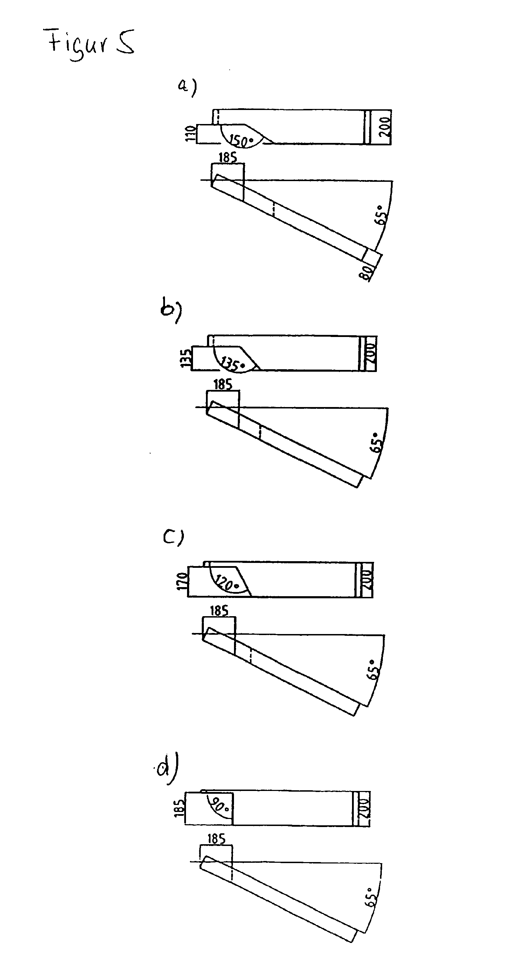

Den Figuren 4 sowie 5 sind verschiedene Parameter besonderer Ausführungsbeispiele der mit der erfindungsgemäßen Vorrichtung hergestellten Werkstücke zu entnehmen. So kann der Ausklinkwinkel 16 beziehungsweise der Schwenkwinkel des Sägeblatts 28 um die Schwenkachse 32 zur Ausführung der beiden Schnittflächen 12, 14 Werte bis zu 270°, bevorzugt bis zu 180°, insbesondere 150° annehmen. Der Verschwenkwinkel 18, das heißt der Winkel zwischen der Anlagefläche 38 und einer im rechten Winkel auf der Schwenkachse 32 angeordneten, in der Ebene der Auflagefläche liegenden Achse, nimmt bevorzugt Werte bis zu ± 75°, insbesondere bis zu ± 65° an. Bei einem Werkstück mit einer Profilhöhe von ca. 250 mm und einer Profilbreite von ca. 400 mm kann die Ausklinkhöhe im Bereich zwischen ca. 100 mm und ca. 200 mm variieren, bei einer Ausklinktiefe von ca. 150 bis 200 mm, bevorzugt 185 mm und einem Schwenkwinkel im Bereich von ± 65°.

Insgesamt wird durch die erfindungsgemäße Vorrichtung ein einfacher konstruktiver Aufbau mit hoher Präzision bei der Durchführung der Schnittflächen 12, 14 erzielt, wobei sich insbesondere kurze Verfahrwege, kürzere Rüstzeiten und eine rasche Bearbeitung ergeben.

Die Funktionsweise der Vorrichtung zur Herstellung von Schiftern 20 mit zwei, einander schneidenden Schnittflächen 12, 14, die zueinander um einen Ausklinkwinkel 16 winklig geneigt und gegeneinander um einen Verschwenkwinkel 18 verschwenkt sind, gestaltet sich wie folgt:

Zunächst wird das zu bearbeitende Werkstück 22 auf der Auflagefläche 34 mittels der Positionier-/Haltemittel 36 in der durch die Anlagefläche 38 vorgegebenen Position relativ zur Schwenkachse 32 ausgerichtet. Die Ausrichtung 42 der Anlagefläche 38 ist durch den jeweils gewünschten Verschwenkwinkel bestimmt. Die erste Schnittfläche 12 wird bei dem hier gewählten Ausführungsbeispiel im wesentlichen parallel zur Auflagefläche 34 in das Werkstück 22 gelegt, während die zweite Schnittfläche 14 mit um den Ausklinkwinkel 16 gegenüber der ersten Schnittfläche 12 geschwenktem Sägeblatt 28 durchgeführt wird.

Dadurch, daß das Werkstück 22 nicht rechtwinklig zur Schwenkachse 32, sondern um den Verschwenkwinkel 18 versetzt ausgerichtet ist, wird die winklige Verschränkung der zweiten Schnittfläche 14 relativ zur ersten Schnittfläche 12 definiert. Diese dem Verschwenkwinkel 18 entsprechende Ausrichtung des Werkstücks 22 hat bei der Ausführung der ersten Schnittfläche 12 keinen Einfluß auf die Lage dieser Schnittfläche 12, da diese Schnittfläche 12 in einer Ebene parallel zur Auflagefläche 34 liegt. Erst bei Ausführung der zweiten Schnittfläche 14 hat die Ausrichtung 42 des Werkstücks 22 um den Verschwenkwinkel 18 einen Einfluß auf die winklige Positionierung in Bezug auf die Verschränkung der Schnittfläche 14 relativ zur Schnittfläche 12. Durch die Schwenkbarkeit des Sägeblatts 28 um die Schwenkachse 32 in Kombination mit der um den Verschwenkwinkel 18 verschwenkten Ausrichtung 42 des Werkstücks 22 wird erreicht, daß die Schnittsäge zur Ausführung der beiden Schnittflächen 12, 14, die um den Ausklinkwinkel 16 geneigt und um den Verschwenkwinkel 18 verschränkt zueinander angeordnet sind, lediglich um eine einzige Schwenkachse 32 zu verschwenken ist.

### Bezugszeichenliste

- 10: Vorrichtung
- 12: Schnittfläche
- 14: Schnittfläche
- 16: Ausklinkwinkel
- 18: Verschwenkwinkel
- 20: Schifter
- 22: Werkstück
- 24: Motor
- 26: Rotationsachse
- 28: Sägeblatt
- 30: Schwenkvorrichtung
- 32: Schwenkachse
- 34: Auflagefläche
- 36: Positionierungs-/Halte-Mittel
- 38: Anlage
- 40: Spannvorrichtung
- 42: Ausrichtung des Werkstückes = Anlagefläche
- 44: Vorschubbewegung
- 46: Ausklinkhöhe
- 48: Querträger
- 50: Umfangslinie
- 52: Führung
- 54: Führung
- 56: Verschwenkachse
- 58: Ausklinktiefe

## Patentansprüche

1. Vorrichtung (10) zur Ausführung von wenigstens zwei einander schneidenden Schnittflächen (12, 14) an einem Werkstück (22), welche um einen Ausklinkwinkel (16) zueinander geneigt sowie um einen Verschwenkwinkel (18) gegeneinander verschränkt ausgerichtet sind, zum Beispiel zur Herstellung eines Schifters (20) oder dergleichen, mit einem um eine Rotationsachse (26) rotierenden und mittels einer Schwenkvorrichtung (30) um eine Schwenkachse (32) verschwenkbaren Sägeblatt (28), bevorzugt Kreissägeblatt, wobei die Schwenkachse (32) zur Bearbeitung des Werkstücks (22) außerhalb der Auflagefläche (34) angeordnet ist, und mit Positionier-/Haltemitteln (36, 38, 40), mittels denen das zu bearbeitende Werkstück (22) auf einer Auflagefläche (34) zur Ausrichtung (42) des Werkstückes (22) für die Ausführung der Schnittflächen (12, 14) festlegbar ist, **dadurch gekennzeichnet, dass** das Sägeblatt (28) von einer Schwenklage zur Ausführung der ersten Schnittfläche (12) in eine Schwenklage zur Ausführung der zweiten Schnittfläche (14) um den Ausklinkwinkel (16) verschwenkbar ist und dass bei der Ausführung der Schnittflächen (12, 14) das Werkstück (22) mittels der Positionier-/Haltemittel (36, 38, 40) gegenüber einer senkrecht auf der Schwenkachse (32) angeordneten, in der Ebene der Auflagefläche (34) liegenden Achse um den Verschwenkwinkel (18) ausgerichtet ist, welcher einen Wert zwischen ± 80° aufweist.

2. Vorrichtung nach Anspruch 1, **dadurch gekennzeichnet, daß** das Sägeblatt (28) in Richtung der Schwenkachse (32) relativ zur Auflagefläche (34) in einer Vorschubbewegung (44) im wesentlichen linear verfahrbar ist.

3. Vorrichtung nach Anspruch 1 oder 2, **dadurch gekennzeichnet, daß** das Sägeblatt (28) im wesentlichen in einem rechten Winkel zur Schwenkachse (32) relativ zur Auflagefläche (34) im wesentlichen linear verfahrbar ist.

4. Vorrichtung nach einem der vorhergehenden Ansprüche, **dadurch gekennzeichnet, daß** die Schwenkachse (32) im wesentlichen eine Tangente zur im wesentlichen kreisförmigen Umfangslinie (50) des Sägeblatts (28) ist.

5. Vorrichtung nach einem der vorhergehenden Ansprüche, **dadurch gekennzeichnet, daß** die Schwenkachse (32) in einer zur im wesentlichen ebenen Auflagefläche (34) parallelen Ebene liegt.

6. Vorrichtung nach einem der vorhergehenden Ansprüche, **dadurch gekennzeichnet, daß** die Schwenkvorrichtung (30) durch bevorzugt zwei kreisbogenförmige Führungen (52, 54) gebildet ist, an denen das Sägeblatt (28) mit Antrieb (24) auf einer Kreisbogenbahn verfahrbar befestigt sind.

7. Vorrichtung nach einem der vorhergehenden Ansprüche, **dadurch gekennzeichnet, daß** die Schwenkvorrichtung (30) an einem Kreuzsupport oder dergleichen in Richtung der Schwenkachse (32) und/oder senkrecht zur Schwenkachse (32) im wesentlichen linear verfahrbar angeordnet ist.

8. Vorrichtung nach einem der vorhergehenden Ansprüche, **dadurch gekennzeichnet, daß** die Positionierung-/Haltemittel (36) an der Aufnahmefläche (34) um eine Verschwenkachse (56) sowie um den Verschwenkwinkel (18) verschwenkbar festlegbar sind.

9. Vorrichtung nach Anspruch 8, **dadurch gekennzeichnet, daß** die Verschwenkachse (56) in einem im wesentlichen rechten Winkel zu der Schwenkachse (32) angeordnet ist.

10. Vorrichtung nach Anspruch 8 oder 9, **dadurch gekennzeichnet, daß** die Verschwenkachse (56) die Schwenkachse (32) schneidet.

11. Vorrichtung nach einem der vorhergehenden Ansprüche, **dadurch gekennzeichnet, daß** Rotationsachse (26) des Sägeblatts (28) und Schwenkachse (32) zu der Bearbeitung des Werkstücks (22) im wesentlichen rechtwinklig zueinander angeordnet sind.

12. Vorrichtung nach einem der vorhergehenden Ansprüche, **dadurch gekennzeichnet, daß** das Sägeblatt (28) zur Bearbeitung um die einzige Schwenkachse (32) verschwenkbar ist und in Richtung der Schwenkachse (32) im wesentlichen linear verfahrbar ist.

13. Vorrichtung nach einem der vorhergehenden Ansprüche, **dadurch gekennzeichnet, daß** die Ausklinktiefe (58) durch Einstellung der Lage der Schwenkachse (32) relative zum Werkstück (22) beziehungsweise relativ zum Positionier-/Haltemittel (36) einstellbar ist.

14. Vorrichtung nach einem der vorhergehenden Ansprüche, **dadurch gekennzeichnet, daß** der Ausklinkwinkel (16) durch den Schwenkwinkel zwischen den Winkellagen des Sägeblattes (28) zur Ausführung der ersten und zweiten Schnittfläche (12, 14) definiert ist.

15. Vorrichtung nach einem der vorhergehenden Ansprüche, **dadurch gekennzeichnet, daß** die Schnittlinien zwischen den Schnittflächen (12, 14) im wesentlichen parallel zur Auflagefläche (34) ausgerichtet sind.

16. Vorrichtung nach einem der vorhergehenden Ansprüche, **dadurch gekennzeichnet, daß** der Ausklinkwinkel (16) beziehungsweise der Schwenkwinkel des Sägeblatts (28) um die Schwenkachse (32) Werte bis zu 270°, bevorzugt bis zu 180°, insbesondere bis zu 150° annimmt.

## Claims

1. Device (10) for executing at least two mutually intersecting cut surfaces (12, 14) at a workpiece (22), which are inclined relative to one another by a notch angle (16) and oriented to be skewed relative to one another by a tilt angle (18), for example for producing a rafter (20) or the like, with a saw blade (28) rotating about an axis (26) of rotation and pivotable by means of a pivot device (30) about a pivot axis (32), preferably a circular saw blade, wherein the pivot axis (32) is, for processing of the workpiece (22), arranged outside the support surface (34), and with positioning/holding means (36, 38, 40), by means of which the workpiece (22) to be processed can be fixed on a support surface (34) for alignment (42) of the workpiece (22) for execution of the cut surfaces (12, 14), **characterised in that** the saw blade (28) is pivotable from a pivot position for execution of the first cut surface (12) into a pivot position for execution of the second cut surface (14) through the notch angle (16) and that in the execution of the cut surfaces (12, 14) the workpiece (22) is oriented by means of the positioning/holding means (36, 38, 40) relative to an axis, which is arranged perpendicularly to the pivot axis (32) and lies in the plane of the support surface (34), through the tilt angle (18), the tilt angle having a value between ± 80°.

2. Device according to claim 1, **characterised in that** the saw blade (28) is movable substantially linearly in an advance motion (44) in the direction of the pivot axis (32) relative to the support surface (34).

3. Device according to claim 1 or 2, **characterised in that** the saw blade (28) is movable substantially linearly at a right angle to the pivot axis (32) relative to the support surface (34).

4. Device according to one of the preceding claims, **characterised in that** the pivot axis (32) is substantially a tangent to the substantially circular circumferential line (50) of the saw blade (28).

5. Device according to one of the preceding claims, **characterised in that** the pivot axis (32) lies in a plane parallel to the substantially planar support surface (34).

6. Device according to one of the preceding claims, **characterised in that** the pivot device (30) is formed by preferably two arcuate guides (52, 54) to which the saw blade (28) together with drive (24) is fastened to be movable on an arcuate path.

7. Device according to one of the preceding claims, **characterised in that** the pivot device (30) is arranged at a cross support or the like to be movable substantially linearly in the direction of the pivot axis (32) and/or perpendicularly to the pivot axis (32).

8. Device according to one of the preceding claims, **characterised in that** the positioning/holding means (36) are fixable to the receiving surface (34) to be pivotable about a tilt axis (56) as well as through the tilt angle (18).

9. Device according to claim 8, **characterised in that** the tilt axis (56) is arranged substantially at a right angle to the pivot axis (32).

10. Device according to claim 8 or 9, **characterised in that** the tilt axis (56) intersects the pivot axis (32).

11. Device according to one of the preceding claims, **characterised in that** the rotational axis (26) of the saw blade (28) and the pivot axis (32) are, for processing the workpiece (22), arranged substantially at right angles to one another.

12. Device according to one of the preceding claims, **characterised in that** the saw blade (28) is, for processing, pivotable about the single pivot axis (32) and movable substantially linearly in the direction of the pivot axis (32).

13. Device according to one of the preceding claims, **characterised in that** the notch depth (58) is settable by setting the position of the pivot axis (32) relative to the workpiece (22) or relative to the positioning/holding means (36).

14. Device according to one of the preceding claims, **characterised in that** the notch angle (16) is defined by the pivot angle between the angle positions of the saw blade (28) for execution of the first and second cut surfaces (12, 14).

15. Device according to one of the preceding claims, **characterised in that** the cut lines between the cut surfaces (12, 14) are oriented substantially parallel to the support surface (34).

16. Device according to one of the preceding claims, **characterised in that** the notch angle (16) or the pivot angle of the saw blade (28) about the pivot axis (32) adopts values up to 270°, preferably up to 180°, particularly up to 150°.

## Revendications

1. Dispositif (10) pour réaliser au moins deux surfaces de coupe qui se coupent (12, 14) sur une pièce à travailler (22), qui sont orientées de façon inclinée l'une par rapport à l'autre sous un angle d'encochage (16) ainsi que de façon entrecroisée l'une par rapport à l'autre sous un angle de basculement (18), par exemple pour la fabrication d'un empannon (20) ou similaires, avec une lame de scie (28), de préférence une lame de scie circulaire, tournant autour d'un axe de rotation (26) et pouvant être amenée à pivoter autour d'un axe de pivotement (32) au moyen d'un dispositif de pivotement (30), dans lequel l'axe de pivotement (32) pour le traitement de la pièce à travailler (22) est disposé en dehors de la surface de support (34), et avec des moyens de positionnement/retenue (36, 38, 40), au moyen desquels la pièce à travailler (22) à traiter peut être immobilisée sur une surface de support (34) pour l'orientation (42) de la pièce à travailler (22) en vue de la réalisation des surfaces de coupe (12, 14), **caractérisé en ce que** la lame de scie (28) peut être amenée à pivoter d'une position de pivotement pour la réalisation de la première surface de coupe (12) à une position de pivotement pour la réalisation de la deuxième surface de coupe (14) sous l'angle d'encochage (16), et **en ce que** lors de la réalisation des surfaces de coupe (12, 14) la pièce à travailler (22) est orientée au moyen des moyes de positionnement/retenue (36, 38, 40) par rapport à un axe disposé perpendiculairement à l'axe de pivotement (32) et situé dans le plan de la surface de support (34) sous l'angle de basculement (18) qui présente une valeur d'environ ±80°.

2. Dispositif selon la revendication 1, **caractérisé en ce que** la lame de scie (28) peut être déplacée de façon substantiellement linéaire en direction de l'axe de pivotement (32) par rapport à la surface de support (34) dans un mouvement d'avance (44).

3. Dispositif selon la revendication 1 ou 2, **caractérisé en ce que** la lame de scie (28) peut être déplacée de façon substantiellement linéaire sous un angle droit par rapport à l'axe de pivotement (32) par rapport à la surface de support (34).

4. Dispositif selon l'une quelconque des revendications précédentes, **caractérisé en ce que** l'axe de pivotement (32) est substantiellement une tangente par rapport à la ligne circonférentielle substantiellement circulaire (50) de la lame de scie (28).

5. Dispositif selon l'une quelconque des revendications précédentes, **caractérisé en ce que** l'axe de pivotement (32) se trouve dans un plan parallèle à la surface de support substantiellement plane (34).

6. Dispositif selon l'une quelconque des revendications précédentes, **caractérisé en ce que** le dispositif de pivotement (30) est réalisé de préférence par deux guidages en forme d'arc de cercle (52, 54) sur lesquels la lame de scie (28) est fixée avec un entraînement (24) de façon à pouvoir se déplacer sur une glissière en arc de cercle.

7. Dispositif selon l'une quelconque des revendications précédentes, **caractérisé en ce que** le dispositif de pivotement (30) est disposé au niveau d'un chariot transversal ou similaires de façon à pouvoir se déplacer de façon substantiellement linéaire en direction de l'axe de pivotement (32) et/ou de façon perpendiculaire à l'axe de pivotement (32).

8. Dispositif selon l'une quelconque des revendications précédentes, **caractérisé en ce que** les moyens de positionnement/retenue (36) peuvent être immobilisés sur la surface de réception (34) de façon pivotante autour d'un axe de basculement (56) ainsi que sous l'angle de basculement (18).

9. Dispositif selon la revendication 8, **caractérisé en ce que** l'axe de basculement (56) est disposé sous un angle substantiellement droit par rapport à l'axe de pivotement (32).

10. Dispositif selon la revendication 8 ou 9, **caractérisé en ce que** l'axe de basculement (56) coupe l'axe de pivotement (32).

11. Dispositif selon l'une quelconque des revendications précédentes, **caractérisé en ce que** l'axe de rotation (26) de la lame de scie (28) et l'axe de pivotement (32) sont disposés de façon substantiellement perpendiculaire l'un à l'autre pour le traitement de la pièce à travailler (22).

12. Dispositif selon l'une quelconque des revendications précédentes, **caractérisé en ce que** la lame de scie (28) pour le traitement est pivotante autour de l'unique axe de pivotement (32) est peut être déplacée de façon substantiellement linéaire en direction de l'axe de pivotement (32).

13. Dispositif selon l'une quelconque des revendications précédentes, **caractérisé en ce que** la profondeur d'encochage (58) peut être réglée par le réglage de la position de l'axe de pivotement (32) par rapport à la pièce à travailler (22) ou par rapport aux moyens de positionnement/retenue (36).

14. Dispositif selon l'une quelconque des revendications précédentes, **caractérisé en ce que** l'angle d'encochage (16) est défini par l'angle de pivotement entre les positions angulaires de la lame de scie (28) pour réaliser les première et deuxième surfaces de coupe (12, 14).

15. Dispositif selon l'une quelconque des revendications précédentes, **caractérisé en ce que** les lignes de coupe entre les surfaces de coupe (12, 14) sont orientées substantiellement en parallèle à la surface de support (34).

16. Dispositif selon l'une quelconque des revendications précédentes, **caractérisé en ce que** l'angle d'encochage (16) ou l'angle de pivotement de la lame de scie (28) autour de l'axe de pivotement (32) adopte des valeurs jusqu'à 270°, de préférence jusqu'à 180°, en particulier jusqu'à 150°.
